# EUROPEAN PATENT APPLICATION

(11) **EP 4 336 646 A1**
(43) Date of publication of application: **13.03.2024**
(21) Application number: 23788522.3
(22) Date of filing: 04.04.2023
(51) Int. Cl.: H01M 50/533, H01M 50/586, H01M 50/59, H01M 50/103

(54) **PRISMATIC SECONDARY BATTERY HAVING IMPROVED SAFETY**

(30) Priority: 11.04.2022 KR 20220044302; 03.04.2023 KR 20230043523
(71) Applicant: LG Energy Solution, Ltd., Seoul 07335 (KR)
(72) Inventor: BOK, Cheon Hee, Daejeon 34122 (KR); SUNG, Joo Hwan, Daejeon 34122 (KR)
(74) Representative: Goddar, Heinz J.
(86) International application number: PCT/KR2023/004513
(87) International publication number: WO 2023/200170

(57) **Abstract**

The present technology relates to a prismatic secondary battery with an electrode assembly having stacked unit cells. For example, the electrode assembly includes a positive electrode tab and a negative electrode tab respectively electrically connected to a positive terminal and a negative terminal provided on a housing of the prismatic secondary battery, and a positive electrode dummy tab and a negative electrode dummy tab electrically insulated from the positive terminal and the negative terminal.

## Description

### [Cross-Reference to Related Applications]

This application is a National Phase entry of International Application No. PCT/KR2023/004513, filed on April 4, 2023, and claims the benefit of and priority to Korean Patent Application No. 10-2022-0044302, filed on April 11, 2022 and Korean Patent Application No. 10-2023-0043523, filed on April 3, 2023, the disclosures of which are incorporated by reference in their entirety for all purposes as if fully set forth herein.

### [Technical Field]

The present disclosure relates to a prismatic secondary battery with improved safety, in which an internal slip of an electrode assembly is prevented.

### [Background]

Secondary batteries are rechargeable unlike primary batteries and have recently been researched and developed many times due to their small size and large capacity potential. The demand for secondary batteries as an energy source is more rapidly increasing due to technology development and an increase in the demand for mobile devices, as well as electric vehicles and energy storage systems that are emerging to meet the needs of environmental protection.

Secondary batteries are classified into coin type batteries, cylindrical type batteries, prismatic type batteries, and pouch type batteries according to the shape of the battery case. In a secondary battery, an electrode assembly mounted inside a battery case is a rechargeable/dischargeable power generation element having a stacked structure of electrodes and a separator.

The electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

A positive electrode tab and a negative electrode tab of the electrode assembly accommodated in a prismatic secondary battery are bonded to electrode leads and then connected to a positive terminal and a negative terminal on a case. The case accommodating the electrode assembly therein includes a space for electrical connection of the electrode assembly and a little extra space for injection of a required amount of an electrolyte. Therefore, shaking or a slip (slip phenomenon) may occur in the electrode assembly in the case due to external impacts. In particular, the slip phenomenon may frequently occur in a prismatic secondary battery used in hybrid vehicles or electric vehicles due to impacts during driving.

The electrode assembly is generally structurally supported by a positive electrode tab and a negative electrode tab (electrode tabs) connected to the positive terminal and the negative terminal. Accordingly, when the slip phenomenon occurs in the electrode assembly, various problems, e.g., a short circuit due to electrical contact or the tearing of the electrode tabs due to the concentration of stress, may occur.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

### [Technical Problem]

The present disclosure is directed to suppressing the occurrence of a slip phenomenon during use of an electrode assembly accommodated in a prismatic secondary battery.

However, technical problems to be solved by the present disclosure are not limited thereto and other technical problems that are not described herein will be clearly understood by those of ordinary skill in the art from the following description of the present disclosure.

### [Technical Solution]

The present disclosure provides a prismatic secondary battery with an electrode assembly having stacked unit cells. For example, the electrode assembly includes a positive electrode tab and a negative electrode tab respectively electrically connected to a positive terminal and a negative terminal provided on a housing of the prismatic secondary battery, and a positive electrode dummy tab and a negative electrode dummy tab electrically insulated from the positive terminal and the negative terminal.

The positive electrode dummy tab and the negative electrode dummy tab may be fixed to the housing to support the electrode assembly.

In an embodiment of the present disclosure, both the positive terminal and the negative terminal may be disposed on a first surface of the housing, and wherein the positive electrode dummy tab and the negative electrode dummy tab may be fixed to a second surface opposite to the first surface on which both the positive terminal and the negative terminal are disposed.

Here, each of a pair of the positive electrode tab and the positive electrode dummy tab and a pair of the negative electrode tab and the negative electrode dummy tab may be aligned to be positioned on a straight line crossing the first surface and the second surface.

Alternatively, each of a pair of the positive electrode tab and the positive electrode dummy tab and a pair of the negative electrode tab and the negative electrode dummy tab may be misaligned with each other in a direction crossing the first surface and the second surface.

Alternatively, each of a pair of the positive electrode tab and the negative electrode dummy tab and a pair of the negative electrode tab and the positive electrode dummy tab may be aligned to be positioned on the straight line crossing the first surface and the second surface.

In another embodiment of the present disclosure, the positive terminal and the negative terminal may be separately disposed on two opposite surfaces of the housing, and the positive electrode dummy tab may be fixed to a surface on which the positive terminal is disposed, and the negative electrode dummy tab may be fixed to a surface on which the negative terminal is disposed.

Alternatively, the positive terminal and the negative terminal may be separately disposed on two opposite surfaces of the housing, the positive electrode dummy tab may be fixed to a surface on which the negative terminal is disposed, and the negative electrode dummy tab may be fixed to a surface on which the positive terminal is disposed.

Here, the positive electrode dummy tab and the negative electrode dummy tab may be aligned to be positioned on a straight line crossing the two opposite surfaces.

The positive electrode dummy tab of the negative electrode dummy tab may be electrically insulated from the housing.

For example, the positive or negative electrode dummy tab electrically insulated from the housing may be fixed to an insulator installed on an inner surface of the housing.

The insulator may comprise a tab insertion groove, and the positive or negative electrode dummy tab insulated from the housing may be inserted into the tab insertion groove.

The positive or negative electrode dummy tab that is not electrically insulated from the housing may be welded on the inner surface of the housing.

In an embodiment of the present disclosure, at least one of the positive electrode dummy tab or the negative electrode dummy tab may be provided in plural.

### [Advantageous Effects]

In a prismatic secondary battery having the above configuration according to the present disclosure, a positive electrode dummy tab and a negative electrode dummy tab are provided at opposite sides of a positive electrode tab and a negative electrode tab of an electrode assembly and are fixed to a housing.

Thus, the electrode assembly is fixed to the housing in both directions to improve a support structure. Accordingly, in the electrode assembly accommodated in the prismatic secondary battery, a slip phenomenon can be suppressed during use to prevent various problems such as a short circuit due to electrical contact or the tearing of tabs, thereby greatly improving the safety of the secondary battery.

However, technical effects achievable through the present disclosure are not limited to the above-described effects, and other effects not mentioned will be clearly understood by those of ordinary skill in the art from the following description of the present disclosure.

### [Brief Description of the Drawings]

Because the following drawings attached to the present specification illustrate exemplary embodiments of the present disclosure and serve to facilitate understanding of the technical idea of the present disclosure together with the detailed description of the invention described below, the present disclosure should not be limitedly interpreted on the basis of the drawings.
FIG. 1 is a diagram illustrating the exterior of a prismatic secondary battery according to an embodiment of the present disclosure.
FIG. 2 is a diagram illustrating an electrode assembly accommodated in the prismatic secondary battery of FIG. 1.
FIG. 3 is a diagram illustrating a support structure of the electrode assembly in the prismatic secondary battery of FIG. 1.
FIG. 4 illustrates another electrode assembly in an embodiment of the present disclosure.
FIG. 5 illustrates another electrode assembly in an embodiment of the present disclosure.
FIG. 6 is a diagram illustrating the exterior of a prismatic secondary battery according to another embodiment of the present disclosure.
FIG. 7 is a diagram illustrating an electrode assembly accommodated in the prismatic secondary battery of FIG. 6.
FIG. 8 is a diagram illustrating a support structure of the electrode assembly in the prismatic secondary battery of FIG. 6.
FIG. 9 illustrates another electrode assembly in another embodiment of the present disclosure.
FIG. 10 illustrates a unidirectional electrode assembly according to another embodiment.
FIG. 11 illustrates a bidirectional electrode assembly according to another embodiment.

### [Detailed Description]

The present disclosure may be embodied in many different forms and implemented in various embodiments and thus example embodiments will be described in detail below.

However, it should be understood that the present disclosure is not limited to particular embodiments and include all modifications, equivalents, and alternatives falling within the spirit and scope of the present disclosure.

It should be understood that the terms "comprises" and/or "has" used herein specify the presence of stated features, integers, steps, operations, elements, components, or a combination thereof, but do not preclude the presence or addition of one or more other features, integers, steps, operations, elements, components, or a combination thereof.

It should be understood that when a component such as a layer, a film, a region or a plate is referred to as being "on" another component, the component is "immediately on" the other component or another component is interposed therebetween. It should be understood that when a component such as a layer, a film, a region, or a plate is referred to as being "below" another component, the component is "immediately below" the other component or another component is interposed therebetween. It should be understood that when a component is "on" another component, the component is on or below the other component.

The present disclosure provides a prismatic secondary battery with an electrode assembly having a stacked structure of unit cells. For example, the electrode assembly includes a positive electrode tab and a negative electrode tab respectively electrically connected to a positive terminal and a negative terminal on a housing of the prismatic secondary battery, and a positive electrode dummy tab and a negative electrode dummy tab electrically isolated from the positive terminal and the negative terminal.

Here, the positive electrode dummy tab and the negative electrode dummy tab are fixed to the housing to support the electrode assembly.

As described above, in a prismatic secondary battery according to the present disclosure, a positive electrode dummy tab and a negative electrode dummy tab are provided at opposite sides of a positive electrode tab and a negative electrode tab of an electrode assembly and are fixed to a housing. Thus, the electrode assembly is fixed in the housing in opposite directions to improve a support structure. Accordingly, the electrode assembly accommodated in the prismatic secondary battery is suppressed from slipping during use to prevent various problems such as a short circuit due to electrical contact or the tearing of tabs, thereby greatly improving the safety of the secondary battery.

### [Detailed Description of the Preferred Embodiments]

Hereinafter, embodiments of a secondary battery of the present disclosure will be described in detail with reference to the accompanying drawings. For reference, the directions of front, back, up, down, left, and right used in the following description to designate relative positions are for the purpose of understanding the invention and refer to the directions shown in the drawings unless otherwise specified.

### (First Embodiment)

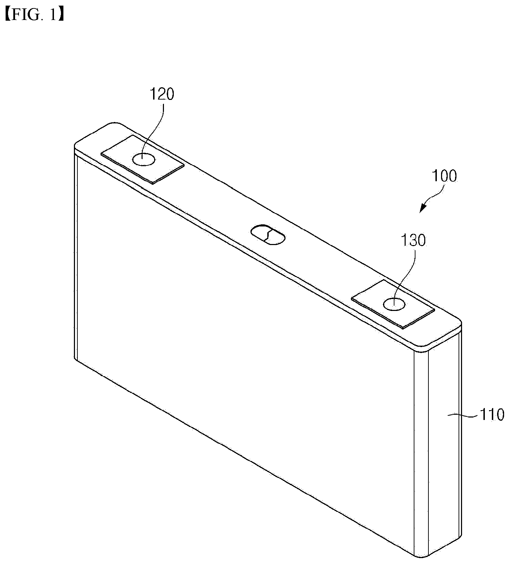

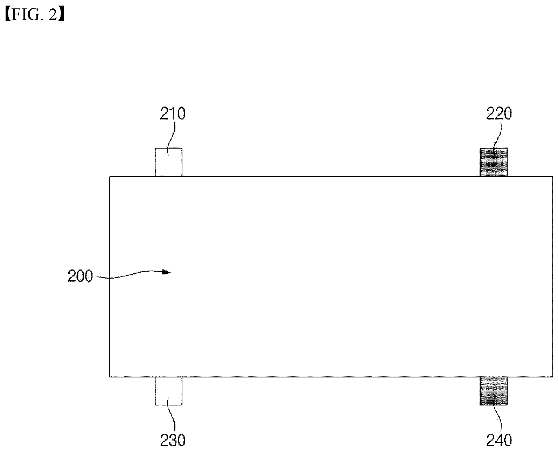

FIG. 1 is a diagram illustrating the exterior of a prismatic secondary battery 100 according to a first embodiment of the present disclosure. FIG. 2 is a diagram illustrating an electrode assembly 200 accommodated in the prismatic secondary battery 100 of FIG. 1.

The prismatic secondary battery 100 of the first embodiment is a unidirectional secondary battery in which both of a positive terminal 120 and a negative terminal 130 are disposed on one surface (an upper surface in the illustrated example) of a housing 110. The electrode assembly 200 having a stacked structure of unit cells is accommodated in the housing 110 in a hermetically sealed manner. The unit cells are cells each having a unit structure of a positive electrode, a separator, and a negative electrode, and one electrode assembly 200 is formed by stacking a plurality of unit cells. General components of a unit cell will be described below.

A positive electrode includes a positive electrode current collector and a positive electrode active material with which one surface or both surfaces of the positive electrode current collector are coated. An end portion of the positive electrode current collector in a width direction includes a non-coated portion not coated with the positive electrode active material. A positive electrode tab 210 is formed by performing a notching (punching) process on the non-coated portion.

A negative electrode includes a negative electrode current collector and a negative electrode active material with which one surface or both surfaces of the negative electrode current collector are coated. An end portion of the negative electrode current collector in the width direction includes a non-coated portion not coated with the negative electrode active material. Likewise, the non-coated portion of the negative electrode functions as a negative electrode tab 220.

Accordingly, in the first embodiment, the positive electrode tab 210 and the negative electrode tab 220 are located at the same end in the width direction of the electrode assembly 200, that is, a height direction of the prismatic secondary battery 100. In the illustrated example, the positive electrode tab 210 and the negative electrode tab 220 extend toward an upper surface of the prismatic secondary battery 100 and are respectively electrically connected to the positive terminal 120 and the negative terminal 130 provided on the housing 110 of the prismatic secondary battery 100.

In the present disclosure, the type of positive electrode active material with which the positive electrode current collector is coated and the type of negative electrode active material with which the negative electrode current collector is coated are not limited as long as they are known in the art.

For example, the positive electrode active material may include an alkali metal compound represented by the general chemical formula of A[AxMy]O2+z (A includes at least one element among Li, Na and K; M includes at least one element selected from among Ni, Co, Mn, Ca, Mg, Al, Ti, Si, Fe, Mo, V, Zr, Zn, Cu, Sc, Ru, and Cr; x≥0, 1 ≤x+y≤2 0.1≤z≤ 2; and the stoichiometric coefficients of components included in x, y, z, and M are selected to maintain electrical neutrality of the compound).

As another example, the positive electrode active material may be the alkali metal compound, xLiM1O2(1x)Li2M2O3, disclosed in USPA 6,677,082, USPA 6,680,143, etc. (M1 includes at least one element having an average oxidation state of 3, M2 includes at least one element having an average oxidation state of 4, and 0≤x≤ 1).

As another example, the positive electrode active material may be lithium metal phosphate represented by the general chemical formula LiaM1xFe1xM2yP1yM3zO4z (M1 includes at least one element selected from among Ti, Si, Mn, Co, Fe, V, Cr, Mo, Ni, Nd, Mg and Al; M2 includes at least one element selected from among Ti, Si, Mn, Co, Fe, V, Cr, Mo, Ni, Nd, Al, Mg, As, Sb, Si, Ge, V and S; M3 includes a halogen element optionally including F; 0<a≤ 2, 0≤x≤1, 0≤y≤1, 0≤z≤1; and the stoichiometric coefficients of components included in a, x, y, z, M1, M2, and M3 are selected to maintain electrical neutrality of the compound) or Li3M2(PO4)3 [M includes at least one element selected from among Ti, Si, Mn, Fe, Co, V, Cr, Mo, Ni, Mg and Al].

Preferably, the positive electrode active material may include primary particles and/or secondary particles in which primary particles are aggregated.

In an example, the negative electrode active material may be a carbon material, a lithium metal or a lithium metal compound, silicon or a silicon compound, tin or a tin compound, or the like. A metal oxide having a potential of less than 2 V, e.g., TiO2 or SnO2, may also be used as a negative electrode active material. The carbon material may be low-crystalline carbon, high-crystalline carbon, or the like.

The separator interposed between the positive electrode and the negative electrode may be a porous polymer film, e.g., a porous polymer film formed of a polyolefin-based polymer such as an ethylene homopolymer, a propylene homopolymer, an ethylene/butene copolymer, an ethylene/hexene copolymer, or an ethylene/methacrylate copolymer, alone or in combination. As another example, the separator may be a general porous nonwoven fabric, e.g., a nonwoven fabric made of high-melting-point glass fiber, polyethylene terephthalate fiber, or the like.

A coating layer of inorganic particles may be formed on at least one surface of the separator. Alternatively, it is also possible that the separator itself is made of a coating layer of inorganic particles. The particles constituting the coating layer may have a structure in which an interstitial volume is present between adjacent particles.

The inorganic particles may be made of an inorganic material having a dielectric constant of 5 or more. In a non-limiting example, the inorganic particles may include at least one material selected from the group consisting of Pb(Zr,Ti)O3 (PZT), Pb1xLaxZr1yTiyO3 (PLZT), PB(Mg3Nb2/3)O3PbTiO3 (PMNPT), BaTiO3, hafnia (HfO2), SrTiO3, TiO2, Al2O3, ZrO2, SnO2, CeO2, MgO, CaO, ZnO and Y2O3.

An electrolyte material constituting the electrolyte with which the electrode assembly 200 is impregnated may be a salt having a structure such as A+B-. Here, A+ includes an alkali metal cation such as Li+, Na+, or K+ or an ion that is a combination thereof. B- includes at least one anion selected from the group consisting of F-, Cl-, Br-, I-, NO3-, N(CN)2-, BF4-, ClO4-, AlO4-, AlCl4-, PF6-, SbF6-, AsF6-, BF2C2O4-, BC4O8-, (CF3)2PF4-, (CF3)3PF3-, (CF3)4PF2-, (CF3)5PF-, (CF3)6P-, CF3SO3-, C4F9SO3-, CF3CF2SO3-, (CF3SO2)2N-, (FSO2)2N-, CF3CF2(CF3)2CO-, (CF3SO2)2CH-, (SF5)3C-, (CF3SO2)3C-, CF3(CF2)7SO3-, CF3CO2-, CH3CO2-, SCN-, and (CF3CF2SO2)2N-.

The electrolyte may be used after being dissolved in an organic solvent. The organic solvent may be propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof.

Referring back to FIG. 2, the electrode assembly 200 of the first embodiment includes the positive electrode tab 210 and the negative electrode tab 220 respectively electrically connected to the positive terminal 120 and the negative terminal 130 on the housing 110 of the prismatic secondary battery 100, and a positive electrode dummy tab 230 and a negative electrode dummy tab 240 respectively electrically isolated from the positive terminal 120 and the negative terminal 130. The positive electrode dummy tab 230 and the negative electrode dummy tab 240 are formed on a non-coated portion opposite to a non-coated portion on which the positive electrode tab 210 and the negative electrode tab 220 are formed. Therefore, in the first embodiment, the positive electrode tab 210 and the negative electrode tab 220 are disposed at opposite ends of the electrode assembly 200, i.e., an upper end of the electrode assembly 200 in the drawing, and the positive electrode dummy tab 230 and the negative electrode dummy tab 240 are disposed at a lower end of the electrode assembly 200.

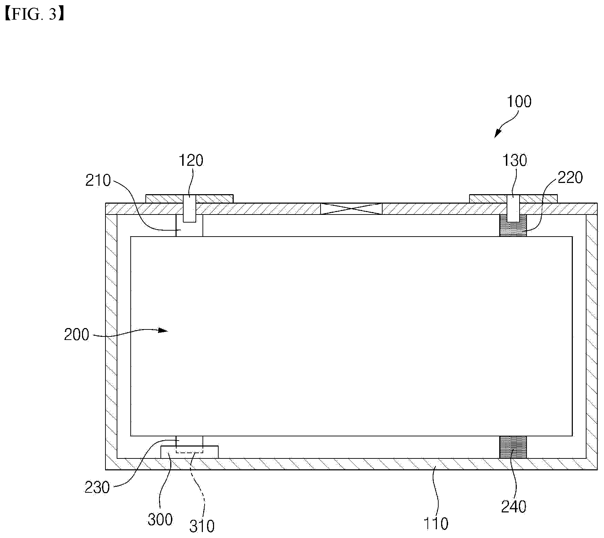

FIG. 3 is a diagram illustrating a support structure of the electrode assembly 200 in the prismatic secondary battery 100 of FIG. 1. As shown in the drawing, the positive electrode tab 210 and the negative electrode tab 220 are fixed to the positive terminal 120 and the negative terminal 130 on the upper surface of the housing 110 by welding, and the positive electrode dummy tab 230 and the negative electrode dummy tab 240 are fixed to a lower surface of the housing 110.

As described above, in the prismatic secondary battery 100 according to the first embodiment of the present disclosure, both upper and lower parts of the electrode assembly 200 are fixed to the housing 110. More specifically, the positive electrode tab 210, the negative electrode tab 220, the positive electrode dummy tab 230 and the negative electrode dummy tab 240 serve as a four-point support structure for fixing the electrode assembly 200 to the housing 110. The four-point support structure provides a strong bearing capacity against external disturbances, and in the electrode assembly 200 supported at four points, a slip may be suppressed during use to prevent various problems such as a short circuit due to electrical contact or the tearing of the electrode tabs 210 and 220, thereby greatly improving the safety of the prismatic secondary battery 100.

In addition, because the positive electrode dummy tab 230 and the negative electrode dummy tab 240 are integrally formed with the positive electrode and the negative electrode of the electrode assembly 200, at least one dummy tab 230 or 240 needs to be electrically insulated from the housing 110 to prevent an internal short circuit when the housing 110 has a polarity. That is, the negative electrode dummy tab 240 should be electrically insulated from the housing 110 when the housing 110 is electrically positive, and the positive electrode dummy tab 230 should be insulated from the housing 110 when the housing 110 is negative. When the housing 110 is electrically neutral, and the dummy tabs 230 and 240 do not necessarily need to be insulated from the housing 110.

FIG. 3 illustrates a case in which the housing 110 is electrically negative, for example, the housing is grounded. The positive electrode dummy tab 230 is fixed to an insulator 300 installed on an inner surface of the housing 110. The positive electrode dummy tab 230 fixed to the housing 110 through the insulator 300 is electrically isolated from the housing 110. For example, the insulator 300 includes a tab insertion groove 310, and the positive electrode dummy tab 230 may be fixed by being inserted into the tab insertion groove 310 of the insulator 300 and pressed.

The negative electrode dummy tab 240 may also be fixed to the housing 110 using the insulator 300, and the negative electrode dummy tab 240 does not need to be insulated from the housing 110 that is electrically negative. Thus, the negative electrode dummy tab 240 may be directly fixed to the inner surface of the housing 110 by welding.

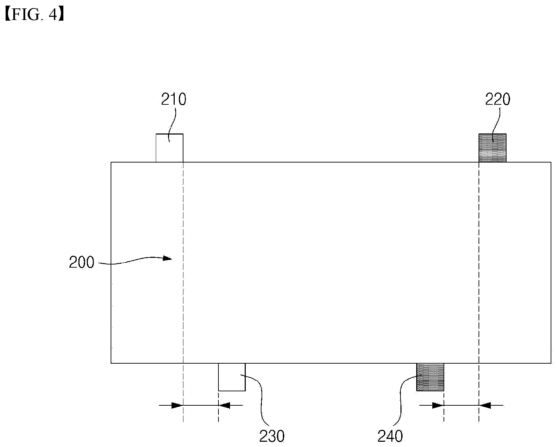

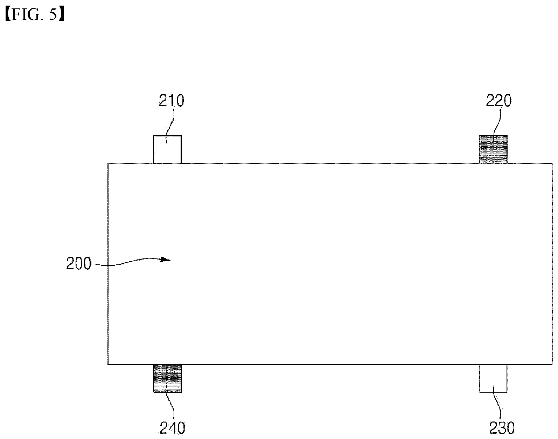

FIG. 4 illustrates another electrode assembly 200 in an embodiment of the present disclosure. FIG. 5 illustrates another electrode assembly 200 in one embodiment of the present disclosure. FIGS. 4 and 5 illustrate various examples of an arrangement of a positive electrode dummy tab 230 and a negative electrode dummy tab 240 with respect to a positive electrode tab 210 and a negative electrode tab 220, in which a four-point support structure of the electrode assembly 200 is maintained the same.

First, referring to FIG. 2, the pair of the positive electrode tab 210 and the positive electrode dummy tab 230 and the pair of the negative electrode tab 220 and the negative electrode dummy tab 240 are aligned to be positioned on a straight line crossing one surface of the electrode assembly 200 and a surface opposite to the one surface, i.e., a straight line crossing a height direction of the housing 110 (a width direction of the electrode assembly 200). That is, the positive electrode dummy tab 230 is opposite to the positive electrode tab 210, and the negative electrode dummy tab 240 is opposite to the negative electrode tab 220.

In comparison, in the electrode assembly 200 of FIG. 4, a pair of the positive electrode tab 210 and the positive electrode dummy tab 230 and a pair of the negative electrode tab 220 and the negative electrode dummy tab 240 are disposed in an offset manner to be misaligned in a direction crossing the one surface and the opposite surface. That is, in the electrode assembly 200 of FIG. 4, the positive electrode dummy tab 230 and the negative electrode dummy tab 240 are disposed to be misaligned with the positive electrode tab 210 and the negative electrode tab 220. By breaking the vertical symmetry of the four-point support structure, and thus changing a natural frequency, it is possible to respond to various aspects of vibrations.

FIG. 5 is a modified example of FIG. 2, in which a pair of the positive electrode tab 210 and the negative electrode dummy tab 240 and a pair of the negative electrode tab 220 and the positive electrode dummy tab 230 are aligned to be positioned on a straight line crossing one surface of an electrode assembly 200 and the opposite surface. That is, the negative electrode dummy tab 240 is opposite to the positive electrode tab 210 and the positive electrode dummy tab 230 is opposite to the negative electrode tab 220, showing that the types (polarities) of the dummy tabs 230 and 240 opposite to the electrode tabs 210 and 220 are not limited to those in the embodiment of FIG. 2.

### (Second Embodiment)

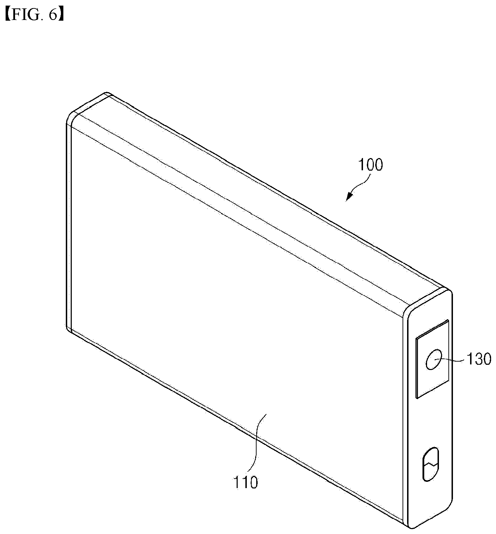

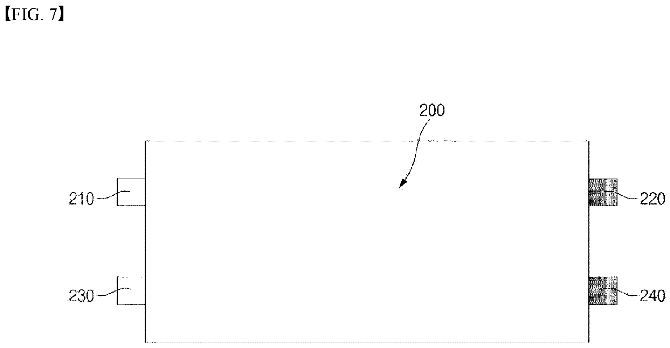

FIG. 6 is a diagram illustrating the exterior of a prismatic secondary battery 100 according to a second embodiment of the present disclosure. FIG. 7 is a diagram illustrating an electrode assembly 200 accommodated in the prismatic secondary battery 100 of FIG. 6.

The second embodiment of the present disclosure relates to the prismatic secondary battery 100 that is a bidirectional secondary battery in which a positive terminal 120 and a negative terminal 130 are separately disposed on two opposite surfaces of a housing 110, and accordingly, the electrode assembly 200 in which unit cells are stacked is different from that of the first embodiment in terms of an arrangement of dummy tabs 230 and 240. The second embodiment of the present disclosure will be described focusing on configurations different from those of the first embodiment described above.

Referring to FIG. 7, a positive electrode tab 210 and a negative electrode tab 220 are separately disposed on left and right ends of the electrode assembly 200 to correspond to the positive terminal 120 and the negative terminal 130 separately disposed on opposite surfaces. The positive electrode dummy tab 230 is fixed to a surface on which the positive terminal 120 is disposed and the negative electrode dummy tab 240 is fixed to a surface on which the negative terminal 130 is disposed.

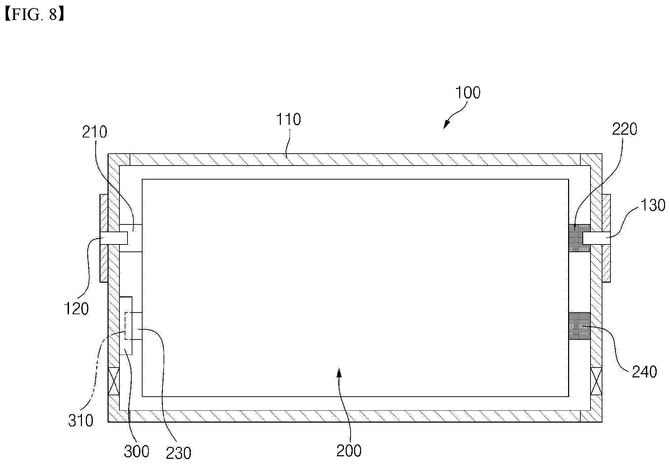

In other words, in the second embodiment of the present disclosure illustrated in FIG. 7, both the positive electrode tab 210 and the positive electrode dummy tab 230 are disposed on one surface (a left side in the drawing) of the housing 110, and both the negative electrode tab 220 and the negative electrode dummy tab 240 are disposed on the opposite surface (a right side in the drawing) of the housing 110. Although the positions of the electrode tabs 210 and 220 and the dummy tabs 230 and 240 provided on the electrode assembly 200 are changed according to the arrangement of terminals of the prismatic secondary battery 100, the four-point support structure of the electrode assembly 200 is also maintained as shown in FIG. 8 and the positive electrode dummy tab 230 or the negative electrode dummy tab 240 may be electrically insulated from the housing 110 in the second embodiment.

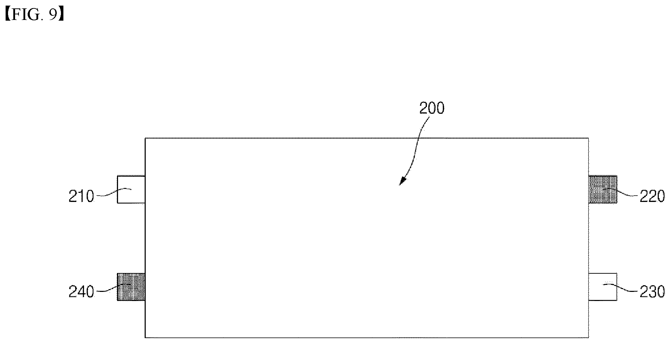

FIG. 9 illustrates another electrode assembly 200 in another embodiment of the present disclosure. In FIG. 9, the positive electrode dummy tab 230 is fixed to a surface on which the negative terminal 130 disposed and the negative electrode dummy tab 240 is fixed to a surface on which the positive terminal 120 is disposed. That is, in the electrode assembly 200 of FIG. 9, both the positive electrode tab 210 and the negative electrode dummy tab 240 are disposed on one surface (a left side in the drawing) of the housing 110, and both the negative electrode tab 220 and the positive electrode dummy tab 230 are disposed on the opposite surface (a right side in the drawing) of the housing 110. In other words, if the four-point support structure of the electrode assembly 200 is maintained, positions at which the positive electrode dummy tab 230 and the negative electrode dummy tab 240 protrude may not be very important.

Here, the positive electrode dummy tab 230 and the negative electrode dummy tab 240 may be aligned to be positioned on a straight line crossing two opposite surfaces, i.e., two opposite surfaces on which the positive electrode tab 210 and the negative electrode tab 220 are disposed opposite to each other. In other words, similar to the arrangement of the positive electrode tab 210 and the negative electrode tab 220, the positive electrode dummy tab 230 and the negative electrode dummy tab 240 may be disposed to precisely opposite to each other.

### (Third Embodiment)

In the first embodiment and the second embodiment described above, an electrode assembly applicable to a unidirectional secondary battery and an electrode assembly applicable to a bidirectional secondary battery are respectively described, and examples in which one positive electrode dummy tab and one negative electrode dummy tab are provided are described. However, in order to further reinforce a support structure of an electrode assembly in a prismatic secondary battery, a plurality of dummy tabs may be provided, and the third embodiment relates to this.

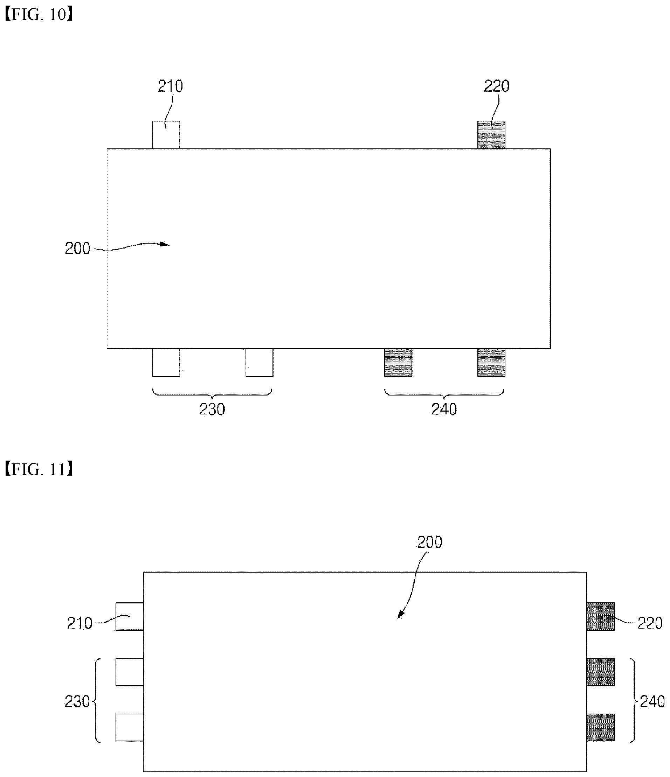

FIG. 10 illustrates a unidirectional electrode assembly in which both a positive electrode tab 210 and a negative electrode tab 220 are disposed on an upper end of an electrode assembly 200. As shown in FIG. 10, a plurality of positive electrode dummy tabs 230 and a plurality of negative electrode dummy tabs 240 (two positive electrode dummy tabs 230 and two negative electrode dummy tabs 240 in the illustrated example) may be provided. The support structure of the electrode assembly 200 may be further reinforced by the plurality of dummy tabs 230 and 240.

FIG. 11 illustrates an electrode assembly 200 that is a bidirectional electrode assembly of the third embodiment, in which a positive electrode tab 210 and a negative electrode tab 220 are separately disposed on two opposite surfaces of the electrode assembly 200, and a plurality of positive electrode dummy tabs 230 are disposed on the surface on which the positive electrode tab 210 is disposed and a plurality of negative electrode dummy tabs 240 are disposed on the surface on which the negative electrode tab 220 is disposed.

Components such as the insulator 300 or the tab insertion groove 310 of the first and second embodiments may also apply to the third embodiment excluding the fact that a plurality of dummy tabs 230 and 240 are provided. FIGS. 10 and 11 illustrate that the plurality of positive electrode dummy tab 230 and the plurality of negative electrode dummy tabs 240 are provided and are the same number. However, this is only an example, and only one of the positive electrode dummy tab 230 and the negative electrode dummy tab 240 may be provided in a plural number and the total number of positive electrode dummy tabs 230 may be different from that of the negative electrode dummy tabs 240.

In the above, the present disclosure has been described above in more detail with reference to the drawings, the embodiments, etc. However, since the configurations illustrated in the drawings or embodiments described in the present specification are only embodiments of the present disclosure and do not reflect all the technical ideas of the present disclosure, it should be understood that there may be various equivalents and modifications that can replace the configurations at the filing date of the present application.

### (Reference Numerals)

| | | | |
|---|---|---|---|
| 100: | prismatic secondary battery | 110: | housing |
| 120: | positive terminal | 130: | negative terminal |
| 200: | electrode assembly | 210: | positive electrode tab |
| 220: | negative electrode tab | 230: | positive electrode dummy tab |
| 240: | negative electrode dummy tab | 300: | insulator |
| 310: | tab insertion groove | | |

## Claims

1. A prismatic secondary battery including an electrode assembly having stacked unit cells, wherein the electrode assembly comprises:
a positive electrode tab and a negative electrode tab respectively electrically connected to a positive terminal and a negative terminal provided on a housing of the prismatic secondary battery; and
a positive electrode dummy tab and a negative electrode dummy tab electrically insulated from the positive terminal and the negative terminal.

2. The prismatic secondary battery of claim 1, wherein the positive electrode dummy tab and the negative electrode dummy tab are fixed to the housing to support the electrode assembly.

3. The prismatic secondary battery of claim 2, wherein both the positive terminal and the negative terminal are disposed on a first surface of the housing, and
wherein the positive electrode dummy tab and the negative electrode dummy tab are fixed to a second surface opposite to the first surface on which both the positive terminal and the negative terminal are disposed.

4. The prismatic secondary battery of claim 3, wherein each of a pair of the positive electrode tab and the positive electrode dummy tab and a pair of the negative electrode tab and the negative electrode dummy tab are aligned to be positioned on a straight line crossing the first surface and the second surface.

5. The prismatic secondary battery of claim 3, wherein each of a pair of the positive electrode tab and the positive electrode dummy tab and a pair of the negative electrode tab and the negative electrode dummy tab are misaligned with each other in a direction crossing the first surface and the second surface.

6. The prismatic secondary battery of claim 5, wherein each of a pair of the positive electrode tab and the negative electrode dummy tab and a pair of the negative electrode tab and the positive electrode dummy tab are aligned to be positioned on a straight line crossing the first surface and the second surface.

7. The prismatic secondary battery of claim 2, wherein the positive terminal and the negative terminal are separately disposed on two opposite surfaces of the housing, and
wherein the positive electrode dummy tab is fixed to a surface on which the positive terminal is disposed, and the negative electrode dummy tab is fixed to a surface on which the negative terminal is disposed.

8. The prismatic secondary battery of claim 2, wherein the positive terminal and the negative terminal are separately disposed on two opposite surfaces of the housing, and
wherein the positive electrode dummy tab is fixed to a surface on which the negative terminal is disposed, and the negative electrode dummy tab is fixed to a surface on which the positive terminal is disposed.

9. The prismatic secondary battery of claim 7 or 8, wherein the positive electrode dummy tab and the negative electrode dummy tab are aligned to be positioned on a straight line crossing the two opposite surfaces.

10. The prismatic secondary battery of claim 2, wherein one of the positive electrode dummy tab and the negative electrode dummy tab is electrically insulated from the housing.

11. The prismatic secondary battery of claim 10, wherein the positive or negative electrode dummy tab electrically insulated from the housing is fixed to an insulator installed on an inner surface of the housing.

12. The prismatic secondary battery of claim 11, wherein the insulator comprises a tab insertion groove, and
wherein the positive or negative electrode dummy tab insulated from the housing is inserted into the tab insertion groove.

13. The prismatic secondary battery of claim 11, wherein the positive or negative electrode dummy tab that is not electrically insulated from the housing is welded on the inner surface of the housing.

14. The prismatic secondary battery of claim 1, wherein at least one of the positive electrode dummy tab or the negative electrode dummy tab is provided in plural.
